# EUROPEAN PATENT APPLICATION

(11) **EP 4 480 812 A1**
(43) Date of publication of application: **25.12.2024**
(21) Application number: 23275092.7
(22) Date of filing: 20.06.2023
(51) Int. Cl.: B64C 1/40, B64D 1/06, B64D 7/00

(54) **CAVITY ACOUSTIC TONES SUPPRESSION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A vehicle is provided. The vehicle comprises: a skin; a cavity exposed to the atmosphere outside of the vehicle; a spoiler positioned in proximity to a leading edge of the cavity, the leading edge being relative to an actual or intended flow direction of a fluid over the cavity. The spoiler comprises: a lower surface, a rear surface and a front surface, wherein in use the front surface faces into fluid coming from the flow direction and wherein the lower surface faces towards the skin; and at least one support member for elevating the spoiler above the skin of the vehicle such that a gap is provided between the skin and the lower surface of the spoiler, wherein the skin, lower surface and rear surface are arranged such that fluid passing through the gap becomes entrained to increase the height of the shear layer above the cavity.

## Description

### FIELD OF THE INVENTION

The present invention relates to a vehicle having a cavity and a spoiler for reducing acoustic noise within the cavity. Example vehicles include aircraft.

### BACKGROUND

When a cavity is moving in ambient fluid, for example when an aircraft bay is moving in air, a shear layer is formed between the moving ambient air and the static air in the cavity (from the reference point of the aircraft). A shear layer is a thin region of concentrated vorticity across which the tangential velocity component varies greatly; it is positioned across the top of the cavity and separates high speed and low speed flow. A vortex is shed from the cavity leading edge and grows as it travels down the shear layer and impacts on the aft (trailing) wall of the bay resulting in the emission of noise. Also, the acoustic wave travels back upstream inside the cavity.

The fluctuating pressure of the acoustic wave may either result in vortices being shed from the leading edge cavity lip or an increase in the growth rate of the vortices such that a series of vortices is formed down the shear layer at a preferential rate which is related to the frequency of the upstream acoustic wave. The vortices grow into large-scale structures as they propagate downstream in the shear layer and then impact the aft (trailing) wall of the cavity at a characteristic rate. This results in acoustic noise being generated at a characteristic rate that may be described as acoustic tones of a characteristic frequency.

Similar problems are found in other types of vehicles, such as high performance cars having open roofs or windows when travelling at speed, or ships at sea with open hatches where the impinging wind speed is high.

Therefore, there is a need for a lightweight palliative mechanism for reducing acoustic noise in cavities moving through fluid.

It is known for aircraft to employ spoiler arrangements to divert the airflow over and beyond the cavity, i.e. over and beyond any boundary layer or prospective shear layer so that the above-described effects do not take place.
In other words, existing standard palliatives aim to provide a form of noise suppression by diverting the shear layer away from the cavity, thickening (diverging) the shear layer, or by generating multiple small scale turbulence resulting in multiple small vortices within the shear layer. In this way, the formation of large-scale vortices in the shear layer, which are part of the tone generation procedure, is disrupted. A method to stop small scale vortices forming into larger vortices is to increase the thickness of the shear layer, as the small vortices move at different speeds which in turn reduces temporal coherence, disrupting larger vortices from forming. Various palliative/spoiler options have different mechanisms that help to reduce noise and tonal resonance.

The present inventor has realised how to improve on such spoilers to further reduce acoustic noise in a cavity.

### SUMMARY OF THE INVENTION

According to a first aspect, there is provided a vehicle comprising:
a skin;
a cavity exposed to the atmosphere outside of the vehicle;
a spoiler positioned in proximity to a leading edge of the cavity, the leading edge being relative to an actual or intended flow direction of a fluid over the cavity, the spoiler comprising:
   a lower surface, a rear surface and a front surface, wherein in use the front surface faces into fluid coming from the flow direction and wherein the lower surface faces towards the skin; and
   at least one support member for elevating the spoiler above the skin of the vehicle such that a gap is provided between the skin and the lower surface of the spoiler, wherein the skin, lower surface and rear surface are arranged such that fluid passing through the gap becomes entrained to increase the height of the shear layer above the cavity.

Advantageously, the spoiler is so arranged to entrain fluid particles flowing beneath it and draw them upwards, further expanding the height of the shear layer.

The support member may comprise a hinge for causing rotation of the spoiler relative to the vehicle. The support member may comprise a sliding mechanism for raising the spoiler away from the skin. The support member may be coupled to an inside surface of the cavity.

The vehicle may comprise a secondary cavity positioned forward of the cavity, wherein the spoiler is arranged to recede into the secondary cavity when it is not in a deployed configuration.

The rear surface may comprise a curved portion. The rear surface may comprise a vertical portion and a curved portion. The curved portion may comprise a concave curve relative to the actual or intended flow direction. The tangent of the angle of curvature at any point along the curved portion may be greater than 0 degrees and less than or equal to 15 degrees.

The rear surface and the lower surface may be components of a single surface.

The rear surface may comprise a planar portion angled acutely to the horizontal plane. The angle of the rear surface to the horizontal may be greater than 0 degrees and less than or equal to 15 degrees.

The skin above which the spoiler is elevated may be angled relative to the horizontal plane so as to increase in height in the flow direction. The skin above which the spoiler is elevated may be curved to form a ramp to incoming flow.

The cavity may be a payload bay for storing a payload. The cavity may be a rotatable payload bay arranged to rotate to expose the payload to the ambient atmosphere.

The vehicle may be an aircraft and the fluid may be air. Alternatively, the vehicle may be a car and the fluid may be air. Alternatively again, the vehicle may be a water vessel and the fluid may be air. Alternatively again, the vehicle may be a water vessel and the fluid may be water.

### BRIEF DESCRIPTION OF THE DRAWINGS

Embodiments of the invention will now be described by way of example only with reference to the figures, in which:
Figure 1 is a schematic illustration (not to scale) of a perspective view of a payload bay module having a spoiler;
Figure 2 is a schematic illustration (not to scale) of a perspective view of a spoiler according to prior art;
Figure 3 is a schematic illustration (not to scale) of a perspective view of a spoiler according to an embodiment;
Figure 4 is a schematic illustration (not to scale) of a perspective view of a spoiler according to another embodiment;
Figure 5 is a schematic illustration (not to scale) of a perspective view of a spoiler according to another embodiment;
Figure 6a is a schematic illustration (not to scale) of a side view of an aircraft having the payload bay module as shown in Figure 1 in a closed configuration; and
Figure 6b is a schematic illustration (not to scale) of a side view of an aircraft having the payload bay module as shown in Figure 1 in an open configuration.

### DETAILED DESCRIPTION

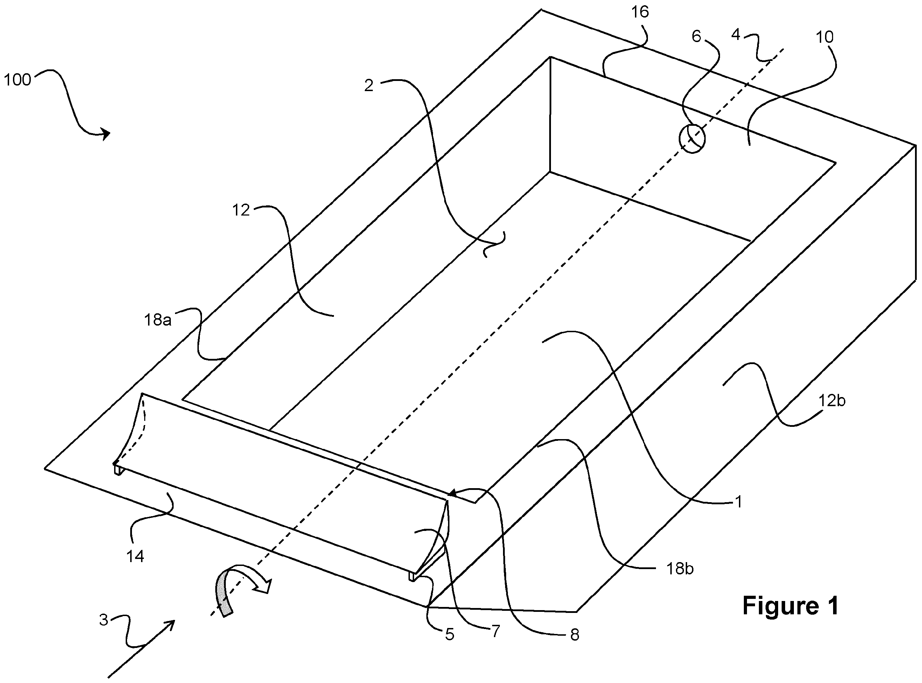

It will be appreciated that relative terms such as horizontal and vertical, top and bottom, above and below, front and back, and so on, are used herein merely for ease of reference to the Figures, and these terms are not limiting as such. Any two differing directions or positions and so on may be implemented rather than truly horizontal and vertical, top and bottom, and so on. In particular, for convenience, in Figure 1 a cavity is shown with it opening at the top of the page, and so for convenience the word "top" is used to mean the opening of the cavity, and the word "above" means further away from the cavity. However, it will be appreciated that the present disclosure refers also to cavities positioned for example underneath the wing or fuselage of an aircraft, i.e. upside down to that shown in Figure 1, but the description use of the word "top" will still refer to the opening part of the cavity and that of the word "above" will still refer to being away from the cavity.

Generally, the present disclosure relates to methods and apparatus for suppression of adverse aeroacoustic effects such as acoustic tones and/or resonance and/or noise and/or other acoustic tone effects in cavities when they are moving relative to an ambient fluid such as air. The present disclosure relates in particular to, but is not limited to, such methods and apparatus for vehicle cavities. Example vehicles include aircraft, and therefore example cavities include bays such as weapons bays and landing gear bays. The apparatus comprises a leading edge cavity palliative (i.e. a spoiler) having front and rear surfaces, both of which having a non-vertical component. The arrangement and shape of the spoiler tends to optimise the jet traversing between the lower face (i.e. bottom face) of the spoiler and the skin of the vehicle (or surface to which the spoiler is attached), to support shear layer growth over the consequent cavity opening.

Figure 1 is a perspective view of bay module 100 (specifically a payload bay module) according to an embodiment. Here, a bay module 100 is a structure having a cavity 2 (otherwise known as a bay) within it. It would be understood that the present invention is applicable to any apparatus having a cavity i.e. any bay, not just those that form part of a discrete module. For example, the cavity 2 may be a depression or recess in the main structure of a vehicle. The walls forming the cavity 2, as later described, may therefore be an integral part of the vehicle itself.

The cavity 2 may be for containing a payload such as a missile or camera system. In use the cavity 2 may be empty. The cavity 2 may comprise a unit within it e.g. a rotary bay module 100 as described herein. The payload may be a deployable payload, or ordinate, that is released from the cavity 2.

The cavity 2 is defined by the inside surface of walls 8, 10, 12 of the bay module 100. In use, the cavity 2 moves through a fluid (e.g. air), and therefore a fluidic main flow acts in the opposite direction (i.e. the flow direction 3) to the actual or intended direction of movement of the cavity 2. When moving through the fluid, the cavity 2 tends to produce unsteady flow structures, which are difficult to simulate.

The bay module 100 comprises, defined relative to the actual or intended main flow direction 3, a leading (i.e. front) wall 8, an aft (trailing) wall 10, and two side walls 12a, 12b (generally 12). In the illustrated embodiment, the bay module 100 comprises a rectangular planar base 1 and has a rectangular opening (i.e. aperture).

Therefore, the cavity 2 is rectangular in cross-section when viewed from above. However, it would be appreciated that the cavity 2 may be an alternative shape, such as circular, semi-circular or triangular in cross-section.

The side walls 12 and aft wall 10 are perpendicular to the planar base 1 (i.e. vertical), while the front wall 8 is slanted relative to the base 1 such that the opening has a greater perimeter than the perimeter of the base 1. In other embodiments, one or more of the walls 8, 12, 10 may be slanted such that the opening has a greater perimeter than the perimeter of the base 1. In other embodiments again, all walls 8, 10, 12 may be substantially vertical.

However, these specific cavity details are not essential, and in other embodiments any other cavity shape may be present. For example, there need not be only four walls 8, 10, 12a, 12b. The walls 8, 10, 12 need not be straight or perpendicular. The cavity 2 may be defined by one or more walls forming a curved or partially curved perimeter to the cavity 2. The perimeter may be irregularly shaped. One or more walls may be sloping. The base 1 and or one or more walls may be undulating or sloped, and so on. However, the suppression will tend to occur more strongly the more straightforwardly the leading edge 14 (compared to the actual or intended flow direction 3) is defined or present.

The cavity 2 opening may be formed by the skin of a vehicle e.g. aircraft. In other words, the cavity 2 may not have walls 8, 10, 12 as such, but be integrally formed with the vehicle. In other words, the skin of the vehicle provides a surface in which a gap or major change in orientations in that surface creates the opening of the cavity 2.

Each wall 8, 10, 12 respectively comprises an upper surface. The inside edges of the upper surface (i.e. the leading edge 14, trailing edge 16, and lateral (side) edges 18a, 18b (generally 18)) define the lip of the cavity 2, i.e. the edges 14, 16, 18 of the cavity 2 define the opening. The upper surfaces of each of the walls 8, 10, 12 are substantially co-planar.

While in the illustrated embodiment the side walls 12 are shown as being longer than the front and rear walls 8, 10, this may not be the case in other embodiments. For example, the cavity 2 may be wider in the transverse (i.e. orthogonal) direction than in the main fluid flow direction 3. In other words, the lateral edges 18 may be shorter than the leading edge 14 and trailing edge 16.

The bay module 100 is a rotary bay having an axis of rotation 4. In the illustrated embodiment, the axis of rotation 4 is aligned with the central longitudinal axis of the bay module 100. In other embodiments, the bay module 100 may rotate about an axis offset to one side of the bay module 100, for example, along the lateral edge 18 of the cavity 2.

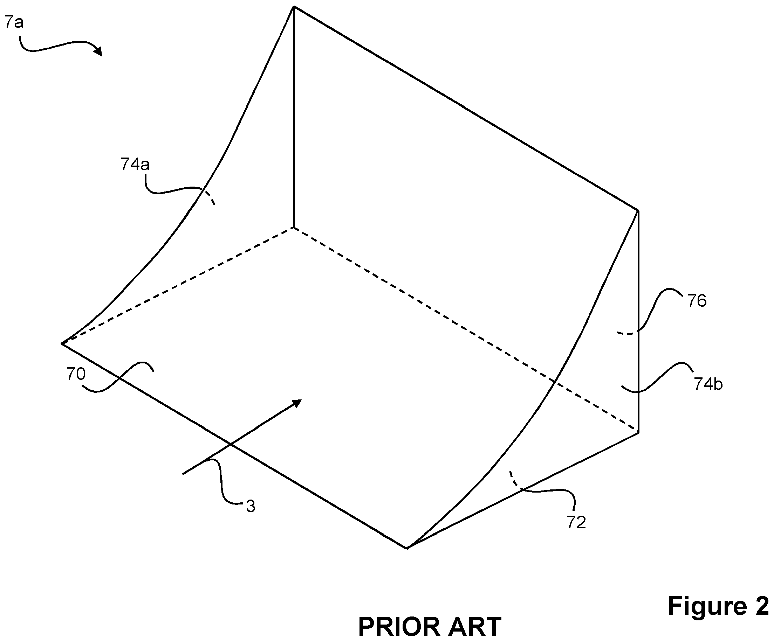

The bay module 100 is driven to rotate about a pivot point 6 through which the axis of rotation 4 passes. As illustrated in Figures 2a and 2b, the bay module 100 may be driven to rotate by a motor 9. The bay module 100 rotates in order to expose the cavity 2 to the ambient flow (e.g. ambient airflow).

A spoiler 7 is positioned in front of the cavity 2, in the path of the main fluid flow direction 3. In use, the spoiler 7 extends away from the cavity 2 into the ambient flow e.g. airflow.

The upper edge of the spoiler 7 is shown as being linear and parallel with the leading edge 14 of the cavity 2 (i.e. with no inclination or declination relative to the plane of the surface to which the flow partition is attached). In another embodiment, the spoiler 7 may vary in height along its length. The maximum height (i.e. vertical extent) of the spoiler 7 may be selected according to the cavity 2 geometry. However, the height of the spoiler 7 is of the order of about 3cm to 20cm.

The spoiler 7 may be shaped to match the shape of the leading edge 14 of the cavity 2. For example, if the cavity 2 is circular in cross-section the spoiler 7 may be curved along its length. The spoiler 7 may be curved along its length even if the leading edge 14 is straight.

The shape of the spoiler 7 in side view will be discussed in more detail later in reference to Figures 2 to 5.

There may be more than one spoiler 7 along the front side of the cavity 2. The plurality of spoilers 7 may be co-axial with each other. In other words, the spoiler 7 may be made up of a series of discontinuous spoilers 7. The plurality of spoilers 7 may be arranged in a "V" shape.

The spoiler 7 is suspended over the upper surface of the front wall 8 such that the lower surface of the spoiler 7 is exposed to airflow. In the illustrated embodiment, the spoiler 7 is coupled to the front wall 8 by a pair of legs 5. However, it would be appreciated that any structural arrangement may be used to provide a gap between the spoiler 7 and the upper surface of the front wall 8. As will be later discussed, the spoiler 7 may be suspended over the upper surface of the front wall 8 by a member connecting it to the inside of the cavity 2 e.g. the inside of the front wall 8.

As explained above, in alternative embodiments the front wall 8 may not exist; here, the surface defining the edges of the cavity 2 opening is part of the vehicle e.g. the skin of the vehicle. The spoiler 7 is suspended above this surface, in front of the cavity 2.

The vehicle skin or surface beneath the spoiler 7 may be flat and parallel to the horizontal plane (assumed to be the flow direction 3 in use). Alternatively, the skin or surface may be profiled so as to increase mass flow between the spoiler 7 lower face (i.e. bottom face) and the skin/surface. In other words, the vehicle skin or upper surface of the front wall 8 may curve upwards to present a ramp to the oncoming fluid flow, growing in height towards the cavity 2. The skin/surface may be planar but inclined relative to the horizontal plane, so as to increase in height towards the cavity 2.

The spoiler 7 could be made from any material strong enough to withstand high velocity freestream flow and high noise. For example, the spoiler 7 may be made of titanium or a composite such carbon fibre. Alternatively, the spoiler 7 may be formed of a plastic or aluminium. The spoiler 7 may be made of the same material as the skin of the vehicle to which it is attached. The spoiler 7 may be formed of gauze or mesh.

In one embodiment, the spoiler 7 comprises at least one hinge. The at least one hinge is coupled to the inside surface of the front wall 8. In alternative embodiments, a hinge is coupled to either side of the spoiler 7 and to the inside surfaces of the front region of the side walls 12.

The hinge (or hinges) is arranged to allow the spoiler 7 to pivot about an axis such that in a retracted configuration the spoiler 7 does not substantially protrude into the ambient flow (i.e. because it is located inside the cavity 2) and in a deployed configuration the spoiler 7 extends into the ambient flow, as shown in Figure 1.

In other words, the suppression system may comprise a hinge coupled to the spoiler 7 for allowing the spoiler 7 to rotate relative to the cavity 2. Such hinges include examples such as an offset hinge or leaf hinge. Thereby, in use, the spoiler 7 arranged to rotate up into the airflow away from the body of the vehicle.

For example, the cavity 2 may be a weapons bay on an aircraft, and the spoiler 7 may translate from a first, stored, position inside the cavity 2 to a second, deployed, position, in the airflow when the weapons bay are doors open.

The spoiler 7 may instead be slidably attached to the inner surface of the cavity front wall 8 or side walls 12 such that it can be slid up to protrude into the ambient flow.

The hinge or sliding mechanism may be motorised, mechanically actuated by movement of a door covering the cavity 2, or spring loaded.

Instead of being rotatably or slidably coupled to one or more walls of the cavity 2, the spoiler 7 may be rotatably or slidably coupled to a second cavity positioned in front of the cavity 2. In other words, the spoiler 7 may be stored within its own cavity 2 in the surface of the vehicle or bay module 100.

In some embodiments, the spoiler 7 is perforated, while in others the face of the spoiler 7 is entirely unbroken.

In the illustrated embodiment, the spoiler 7 extends completely across the width of the cavity 2. However, this need not be the case, and in other embodiments the spoiler 7 may extend only across a part of the width of the cavity 2, but this will be preferably at least half the width of the cavity 2, and yet more preferably over at least three quarters (¾) of the width of the cavity 2.

Instead of being arranged orthogonally to the flow direction 3, the spoiler 7 may be angled (in the vertical plane as viewed in the Figures) relative to the flow direction 3. In this embodiment, the front surface of the spoiler 7 presents an acute angle to the impinging flow direction 3. In other words, a first region of the front surface of the spoiler 7 is located closer to the front of the cavity 2 than a second region of the front surface of the spoiler 7. Particularly, where the spoiler 7 has an undulating front surface, a longitudinal axis passing through each end of the spoiler 7 may form an obtuse angle relative to the impinging flow direction 3.

The spoiler 7 may be positioned upstream from the leading edge 14 (i.e. in front of the cavity 2) at any position in the proximity of the leading edge 14. This position may be at any distance from the leading edge 14 less than or equal to half the distance between the leading edge 14 and the aft (trailing) edge 16. Preferably, however, the spoiler 7 is positioned upstream from the leading edge 14 at a distance from the leading edge 14 less than or equal to 0.2 x the distance between the leading edge 14 and the aft (trailing) edge 16 (i.e. the length of the cavity 2); more preferably at a distance from the leading edge 14 less than or equal to 0.1 x the length of the cavity 2; and yet more preferably at a distance from the leading edge 14 less than or equal to 0.05 x the length of the cavity 2. In yet further embodiments, the spoiler 7 is positioned directly over the leading edge 14 such that the vertical plane passing through the front edge 14 is co-planar with the vertical plane passing through the rearmost portion of the spoiler 7.

The spoiler 7 functions when a fluid is able to flow beneath its lower surface. The spoiler 7 tends to function most advantageously when there is a relatively small gap between its lower surface and the surface to which the spoiler 7 is attached (i.e. the skin of the aircraft). However, in an alternative embodiment, the spoiler 7 is positioned downstream of the leading edge 14 (i.e. above the cavity 2) such that fluid can flow between the base 1 and the underside of the spoiler 7.

Here, the spoiler 7 is positioned closer to the leading edge 14 than it is to the aft (trailing) edge 16. More particularly, in this embodiment the spoiler 7 is positioned such that the distance of the spoiler 7 from the leading edge 14 equals between 0.02 and 0.07 x the total distance between the leading edge 14 and the aft (trailing) edge 16 (i.e. the total length of the cavity 2). Preferably, the distance is 0.05 x the total length of the cavity 2.

The spoiler 7 serves to increase the thickness of the shear layer. The shear layer is the region between a line representing the top (i.e. furthest away from the cavity 2) of the spoiler 7 and a line representing the bottom (i.e. closest to the cavity 2) of the spoiler 7. The thickness of the shear layer at any point along the cavity 2 is correspondingly the distance between the top of the shear layer and the bottom of the shear layer.

The shape of the spoiler 7, which will now be described in more detail with reference to Figures 2 to 5, tends to help lift the shear layer even further above the cavity 2 than a typical spoiler i.e. giving the shear layer greater reach and reducing its effect on equipment and payloads within the cavity 2. At subsonic Mach regimes, fluid is able to navigate through the gap between the spoiler 7 and the surface around the cavity 2 (e.g. the skin of the vehicle). Prior art spoiler designs forward of the cavity 2 opening, as will now be described with reference to Figure 2, have not optimised this fluid flow to support shear layer growth.

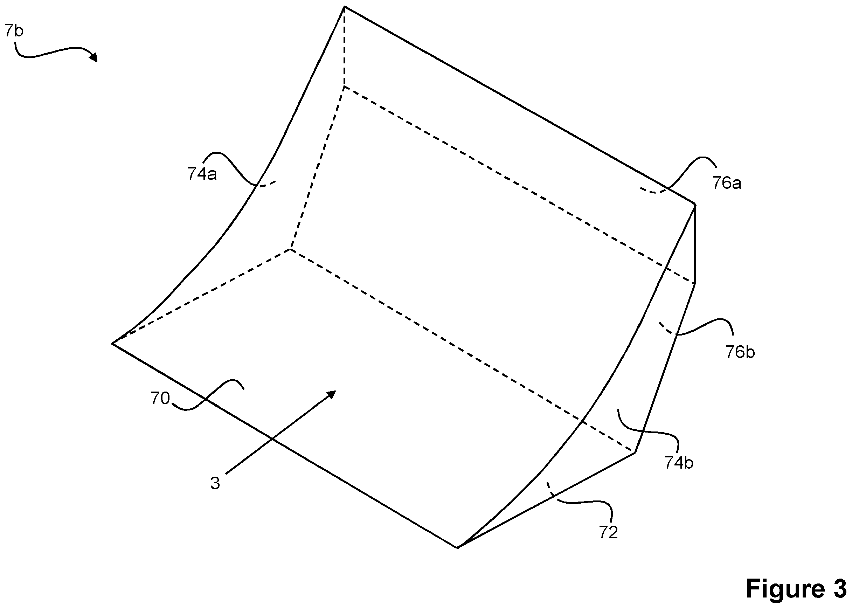

Figure 2 illustrates a typical prior art spoiler 7a, as may be found on existing cars and other vehicles. Figures 3 to 5 illustrate spoilers 7b-d according to embodiments. The spoilers 7a-d may be used to replace the spoiler 7 shown in Figure 1.

Common to all embodiments, the spoiler 7 comprises a front face 70 and a rear face 76. The front face 70 is that facing into the flow direction 3 i.e. facing the direction of the travel of the vehicle. The rear face 76 faces towards the cavity 2. Some embodiments include a bottom face 72. The bottom face 72 is that facing the skin of the vehicle or upper surface of the front wall 8 of the bay module 100.

In the illustrated embodiments, the front face 70 of the spoilers 7a-d comprises a concave surface which forms a ramp for oncoming fluid flow. However, in a less preferable embodiment the front face 70 may be flat. The front face 70 may be vertically arranged.

Some embodiments, and all of those illustrated, include a right side face 74a and a left side face 74b (generally, side face 74). However, in less-preferable embodiments the spoiler 7 may be open sided, or the front face 70 may blend into the rear face 76. The faces 70, 72, 74, 76 are connected together to form a three-dimensional structure.

In Figure 2, the bottom face 72 and rear face 76 of the spoiler 7a are joined at right angles, such that the rear face 76 is vertically arranged. The rear face 76 is planar.

In the embodiment of Figure 3, the rear face 76 of the spoiler 7b is divided into a first rear face 76a and a second rear face 76b. The first rear face 76a and second rear face 76b are both planar. The first rear face 76a is vertical and coupled to a top vertex of the front face 70. The second rear face 76 is connected to the bottom face 72 and the lower vertex of the first rear face 76a. The bottom face 72 is not as deep as the front face 72, and therefore the second rear face 76b is arranged at an angle relative to the horizontal. The angle between the second rear face 76b and the horizontal plane is at most 15 degrees. At greater angles, the flow tends to separate from the spoiler 7b and not navigate vertically.

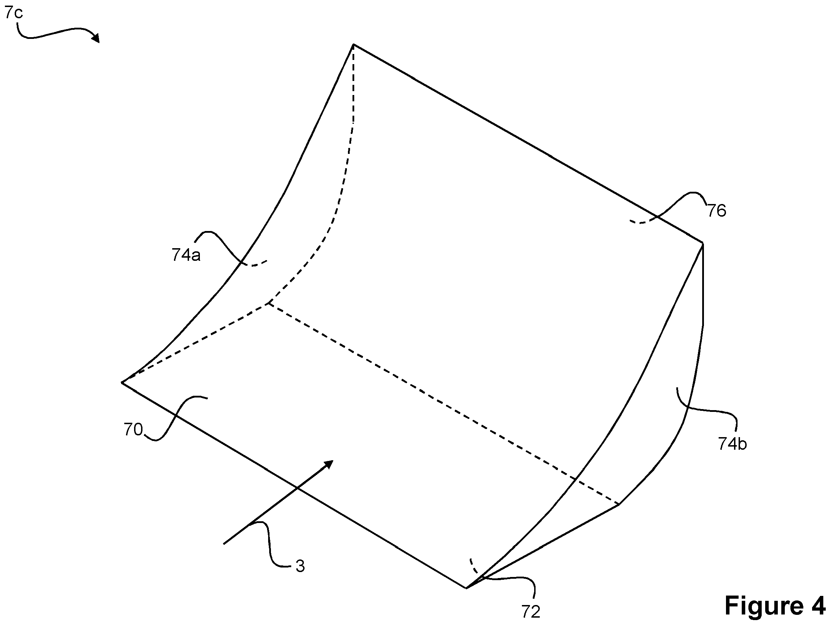

As shown in the embodiment of Figure 4, the spoiler 7c does not include a bottom face 72 and instead the rear face 76 couples directly to the front face 70 at a lower vertex of the front face 70. However, here the rear face 76 comprises a generally horizontal component that performs the same role as the bottom face 72 as described throughout the specification. The rear face 76 of the spoiler 7c is curved concavely. In other words, this curve removes the right angled interface of the rear face 76 and bottom face 72 of the prior art spoiler 7a as these are now blended into one face. The tangential vector of the curvature of the rear face 76 does not exceed 15 degrees and is no less than 0 degrees at any point.

The initial tangent of the rear face 76 of the spoiler 7c at its lowermost portion (front to rear) should not exceed 20 degrees relative to the flow direction 3. Likewise, the initial tangent of the uppermost portion (top to bottom) of the rear face 76 of the spoiler 7c should not exceed 20 degrees. At the point where these two tangents meet, the curvature is increased to provide a smooth blend between the upper portion and lower portion of the rear face 76.

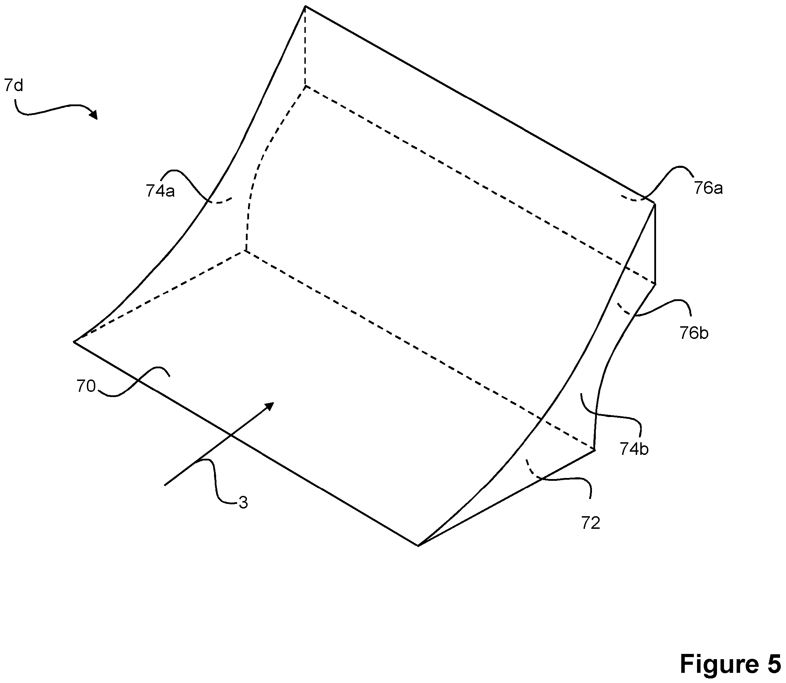

In the embodiment of Figure 5, the rear face 76 of the spoiler 7d is divided into a first rear face 76a and a second rear face 76b. The first rear face 76a is vertical and coupled to a top vertex of the front face 70. The second rear face 76 is concave in shape and connected to the bottom face 72 and the lower vertex of the first rear face 76a.

While in the illustrated embodiments the bottom face 72 of the spoiler 7 is horizontal (i.e. so as to present a minimal surface area to the impinging flow (i.e. oncoming flow) coming from the flow direction 3 as it is parallel thereto), in other embodiments the bottom face 72 of the spoiler 7 is slightly angled with respect to the flow direction 3. Preferably, the bottom face 72 is arranged at an angle of 10 to 20 degrees to the flow direction 3 so as to expand the gap between the bottom face 72 of the spoiler 7 and the vehicle skin from the forward most position of the spoiler 7 to the rear of the spoiler 7 (in the flow direction 3). In other words, the gap between the skin/surface and the bottom face 72 increases in size towards the cavity 2. This tends to increase the mass flow between the spoiler 7 bottom face 72 and the skin/surface.

The rear face 76 may comprise cuts, extrusions or bulges.

Having a non-vertical rear face 76 that entrains the fluid flow (i.e. jet flow) and adds a vertical component to the fluid flow such that at the end of its path it is substantially orthogonal to the original flow direction 3. This helps to support increasing height of the shear layer positioned over the cavity 2 opening. Increasing the shear layer height, helps reduce/remove acoustic fatigue and provides a cavity flow which is better suited for installation of payload (e.g. devices, equipment, instrumentation) carried within the cavity 2.

Considering the example of a car having a sun roof. A spoiler 7 as generally described above may sit forward of the sun roof opening but raised above the car skin to allow fluid flow to navigate the gap underneath the spoiler 7. The shaping of the rear face 76 and (in some cases) bottom face 72 of the spoiler 7 tends to maintain an attached fluid flow on the bottom face 72 of the spoiler 7. This would result in the fluid flow navigating the gap to change its trajectory from parallel to skin surface (i.e. along the flow direction 3) to a trajectory having a normal component of velocity in relation to the oncoming flow direction 3. In other words, the fluid particles are entrained by the bottom face 72 and rear face 76 of the spoiler 7 and are directed upwards, over the cavity 2 to a greater extent than they otherwise would be.

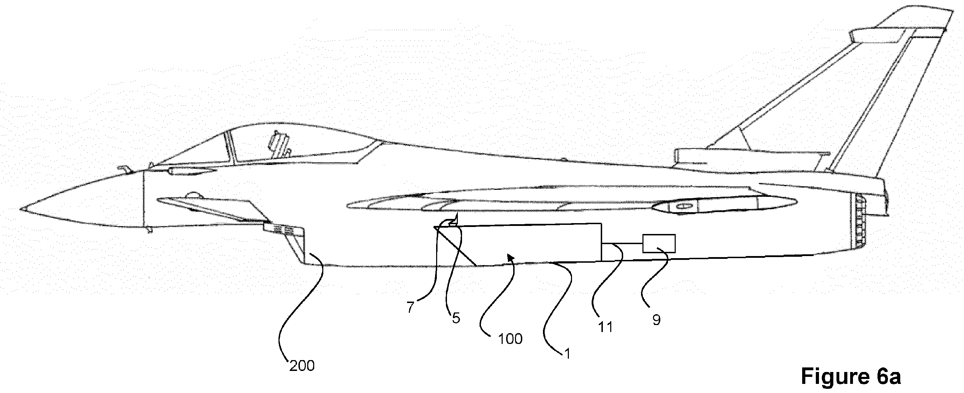

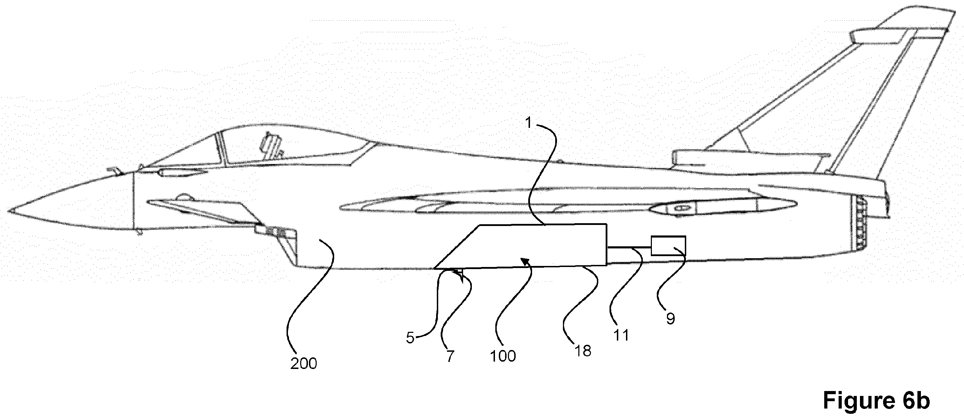

Operation of the bay module 100 will now be described with reference to Figures 6a and 6b. Here, a fighter aircraft 200 having the bay module 100 is illustrated, although it would be appreciated the bay module 100 may be installed in other forms of vehicle. The bay module 100 is shown in cross-section while the rest of the aircraft 200 is shown in schematic form.

Figure 6a shows the bay module 100 in a closed configuration. Here, the side of the bay module 100 having the opening, i.e. the aperture defined by the edges 14, 16, 18 of the cavity 2, faces the inside of the aircraft 200. The outer surface of the base 1 of the bay module 100 faces toward the ambient atmosphere outside of the aircraft 200.

The bay module 100 is shown installed in the ventral fuselage of the aircraft 200. The bay module 100 may instead be installed in the fuselage shoulders, or in the wings of the aircraft 200.

A shaft 11 couples the bay module 100 at the pivot point 6 to a motor 9. The motor 9 is for example an electric motor. When activated, the motor 9 drives the shaft 11 to rotate and in so doing open or close the bay module 100. In other embodiments, the motor 9 may be directly coupled to the pivot point 6. In other embodiments again, bay 100 may comprise the motor 9 that is mechanically coupled to a fixed point in the body of the aircraft 200. In use, the bay module 100 may arranged to extend out into the surrounding flow or be drawn inside the aircraft 200 before rotating into the open configuration.

The bay module 100 may translate and rotate simultaneously. Alternatively, the bay module 100 may be arranged to rotate about one axis 4 only.

The outer edges of the base 1 may form a relatively tight seal with the skin of the aircraft 200 surrounding the bay module 100 when in the closed configuration. The base 1 may extend beyond the shape defined by the outer surface of the walls 8, 10, 12, of the bay module 100. In other words, the external surface of the base 1 may be conformal with the skin of the aircraft 200.

Figure 6b illustrates the bay module 100 in an open configuration. Here, the motor 9 has driven the bay module 100 to rotate such that the cavity 2 opening is facing toward the ambient atmosphere to expose the payload within. The spoiler 7 protruding above the surface in front of the front lip of the cavity 2 is therefore shown protruding into the ambient airflow.

Instead of being rotatable as described above, the bay 100 may be fixed (i.e. static) and may be persistently open or comprise hinged doors. Here, the spoiler 7 may be arranged to fold or slide into the cavity 2 for storage, as described above.

While the ambient fluid through which the bay 100 is moving is described above as flowing air (i.e. airflow), it may instead be water. It would be understood that particular design features would be dependent on the cavity system and its operational environment, i.e. air, land or sea.

Also, it will be appreciated that in embodiments with cavity 2 shapes as described above, including irregularly shaped cavities 2, the skilled person will modify such directions described above as parallel, transverse, perpendicular, and the like, which are suitable for regularly shaped cavities 2, to provide other directions that achieve corresponding functionalities, at least to some extent, as those described above as parallel, transverse, perpendicular, and the like. Also, even when the cavity 2 is regularly shaped, in yet further embodiments, directions that contain a resolved part of the described parallel, transverse, perpendicular, and the like direction may be implemented instead of completely parallel, transverse, perpendicular, and the like directions. For example, the spoiler 7 may cross in front of a rectangular cavity 2 with a transverse direction that is at an oblique angle to the stated direction, but contains a resolved element of that direction and hence of its effect, for example at a direction of 15°, 30° or 45° to the direction parallel to the leading edge 14.

While the embodiments described above relate to a spoiler 7 suitable for use on an aircraft, such as a civil airliner, military fighter jet or a helicopter, it would be appreciated the spoiler is suitable for use on other forms of vehicle. The spoiler 7 is applicable to land vehicles such as trains and high performance cars, and naval vessels such as yachts and submarines. The cavity 2 may be a wheel well, torpedo tube, weapons bay, window, sunroof, open superstructure, or any other cavity moving through fluid or having fluid moving past it.

Singular references do not exclude a plurality; thus, references to 'a', 'an', 'first', 'second', etc. do not preclude a plurality. In the claims, the terms "comprising" or "including" do not exclude the presence of other elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A vehicle comprising:
a skin;
a cavity exposed to the atmosphere outside of the vehicle;
a spoiler positioned in proximity to a leading edge of the cavity, the leading edge being relative to an actual or intended flow direction of a fluid over the cavity, the spoiler comprising:
a lower surface, a rear surface and a front surface, wherein in use the front surface faces into fluid coming from the flow direction and wherein the lower surface faces towards the skin; and
at least one support member for elevating the spoiler above the skin of the vehicle such that a gap is provided between the skin and the lower surface of the spoiler, wherein the skin, lower surface and rear surface are arranged such that fluid passing through the gap becomes entrained to increase the height of the shear layer above the cavity.

2. The vehicle according to claim 1, wherein the support member comprises a hinge for causing rotation of the spoiler relative to the vehicle.

3. The vehicle according to claim 1, wherein the support member comprises a sliding mechanism for raising the spoiler away from the skin.

4. The vehicle according to claim 2 or claim 3, wherein the support member is coupled to an inside surface of the cavity.

5. The vehicle according to any one of the preceding claims, comprising a secondary cavity positioned forward of the cavity, wherein the spoiler is arranged to recede into the secondary cavity when it is not in a deployed configuration.

6. The vehicle according to any one of the preceding claims, wherein the rear surface comprises a curved portion.

7. The vehicle according to claim 6, wherein the rear surface comprises a vertical portion and a curved portion.

8. The vehicle according to claim 6 or claim 7, wherein the curved portion comprises a concave curve relative to the actual or intended flow direction.

9. The vehicle according to any one of claims 6 to 8, wherein the rear surface and the lower surface are components of a single surface.

10. The vehicle according to any one of claims 1 to 5, wherein the rear surface comprises a planar portion angled acutely to the horizontal plane.

11. The vehicle according to any one of the preceding claims, wherein the skin above which the spoiler is elevated is angled relative to the horizontal plane so as to increase in height in the flow direction.

12. The vehicle according to claim 11, wherein the skin above which the spoiler is elevated is curved to form a ramp to incoming flow.

13. The vehicle according to any one of the preceding claims, wherein the cavity is a payload bay for storing a payload.

14. The vehicle according to claim 13, wherein the cavity is a rotatable payload bay arranged to rotate to expose the payload to the ambient atmosphere.

15. The vehicle according to any one of the preceding claims, wherein the vehicle is an aircraft and the fluid is air.
